# EUROPÄISCHE PATENTSCHRIFT

(11) **EP 3 847 062 B1**
(45) Veröffentlichungstag und Bekanntmachung des Hinweises auf die Patenterteilung: **29.10.2025**
(21) Anmeldenummer: 19755841.4
(22) Anmeldetag: 06.08.2019
(51) Int. Cl.: B60T 13/66, B60T 13/68, B60T 8/50

(54) **VERTEILTE REGLERSTRUKTUR ZUR ERZIELUNG OPTIMIERTER REGLEREIGENSCHAFTEN SOWIE ERHÖHTER VENTILLEBENSDAUER**
DISTRIBUTED REGULATOR STRUCTURE FOR ACHIEVING OPTIMISED REGULATOR PROPERTIES AND INCREASED VALVE SERVICE LIFE
STRUCTURE DE RÉGULATEUR DISTRIBUÉE POUR OBTENIR DES PROPRIÉTÉS DE RÉGULATEUR OPTIMISÉES ET UNE DURÉE DE VIE DE SOUPAPE ACCRUE

(30) Priorität: 07.09.2018 DE 102018215295
(43) Veröffentlichungstag der Anmeldung: 14.07.2021
(73) Patentinhaber: KNORR-BREMSE Systeme für Schienenfahrzeuge GmbH, 80809 München (DE)
(72) Erfinder: FISCHER, Marcus, 80469 München (DE); HOLZ, Michael, 81543 München (DE); HERDEN, Marc-Oliver, 81377 München (DE); WACH, Jörg-Johannes, 81247 München (DE)
(86) Internationale Anmeldenummer: PCT/EP2019/071116
(87) Internationale Veröffentlichungsnummer: WO 2020/048714

(56) Entgegenhaltungen:
- DE-A1- 102010 010 606
- DE-A1- 102014 103 840
- DE-A1- 19 848 992
- DE-A1- 19 918 070
- GB-A- 1 506 005
- US-A1- 2008 234 909
- US-A1- 2011 121 640

## Beschreibung

Die vorliegende Erfindung bezieht sich auf ein System sowie ein Bremssystem zur Beeinflussung eines Bremsdruckes eines Fahrzeugs, insbesondere eines Schienenfahrzeugs. Weiterhin bezieht sich die vorliegende Erfindung auf ein Verfahren und ein Computerprogrammprodukt zur Beeinflussung des Bremsdruckes eines Fahrzeugs.

Zur Beeinflussung des Bremsdruckes, insbesondere des pneumatischen Bremsdruckes, eines Fahrzeugs werden (Vorsteuer-) Ventile verwendet. Generell besteht bei der Druckregelung ein Zielkonflikt zwischen den benötigten Schaltspielzahlen und der erzielbaren Genauigkeit bzw. der realisierten Höhe und Steigung einzelner Drucksprünge. Letztere wirken sich direkt auf die Qualität der Druckregelung aus. Im Fahrzeug kann hier durch die stufenweise Änderung des Druckes und damit der Verzögerung ein Ruck spürbar sein. Dieser beeinträchtigt den Fahrkomfort. Zudem sind hier negative Auswirkungen, insbesondere Verschleißauswirkungen, auf verwendete Bestandteile des entsprechenden Bremssystems festzustellen. Die erzielbare Genauigkeit und die Toleranzen wirken sich direkt auf die erzielbare Bremsweggenauigkeit aus.

Um die Auswirkungen auf den Bremsweg sowie den Ruck gering zu halten, wird der Einsatz einer erhöhten Anzahl von Schaltspielen (z.B. pro Bremsung, pro Druckrampe, etc.) vorgesehen. Dies hat jedoch eine Reduktion der Lebensdauer der verwendeten Ventile zur Folge.

Weiterhin sind für unterschiedliche Anwendungen, z.B. zur Regelung des Bremsdruckes der Service- oder Notbremse oder für einen Gleitschutzeingriff unterschiedliche Eigenschaften der Regelung erforderlich (Entlüftungsleistung, Regelgenauigkeit etc.). Werden beide Funktionen gleichzeitig in ein Ventil integriert, hat dies Zielkonflikte zur Folge.

Aktuell werden für unterschiedliche Druckregelungsaufgaben unterschiedliche Stellglieder verwendet, welche spezifische Vor- und Nachteile besitzen. Im Allgemeinen werden hier Relaisventil-Lösungen sowie Kolben- oder Membranventile verwendet, letztere speziell für den Einsatz zur Gleitschutzregelung, da hier schnell schaltende Ventile benötigt werden, um Schäden an den Radsätzen des Fahrzeugs zu vermeiden.

In diesem Zusammenhang offenbart die DE 199 18 070 A1 eine Druckregelvorrichtung, die modular aus mindestens drei Ventilgruppen aufgebaut ist, die jeweils aus einem Magnetventil und einem Membranventil bestehen. Die Magnetventile sind durch ein Druckregelmodul elektrisch angesteuert und weisen einem mit Vorratsdruck beaufschlagten pneumatischen Eingang und einen pneumatischen Ausgang auf, der die zugeordneten Membranventile steuert. Der Vorratsdruck liegt ferner am Eingang des ersten Membranventils an, wobei dessen Ausgang mit einem pneumatischen Eingang (35, 36) des zweiten und dritten Membranventils verbunden ist. Der Ausgang des zweiten Membranventils ist mit der Atmosphäre verbunden und der Ausgang des dritten Membranventils steht mit einem Verbraucher und einem Drucksensor in Strömungsverbindung, der den Verbraucherdruck misst und ein diesem entsprechendes elektrisches Signal dem Druckregelmodul zuführt. Zudem offenbart die DE 10 2010 010606 A1 Drucksteuervorrichtung einer Druckmittel-Bremsanlage eines Fahrzeugs zum radindividuellen, wenigstens bremsschlupfabhängigen Steuern von Bremsdrücken in Bremszylindern von Rädern einer Achse, wobei sie ein einziges Relaisventil beinhaltet.

Es ist Aufgabe der vorliegenden Erfindung, den oben beschriebenen Zielkonflikt zwischen schneller und genauer Beeinflussung des Bremsdruckes bei möglichst geringer Beeinflussung der Lebensdauer der eingesetzten Ventile zu lösen. Unter "Beeinflussung des Bremsdruckes" ist dabei sowohl Steuerung als auch Regelung des Bremsdruckes zu verstehen.

Diese Aufgabe wird mittels der unabhängigen Patentansprüche gelöst. Vorteilhafte Weiterbildungen sind Gegenstand der Unteransprüche.

Nachfolgend wird unter dem Begriff "Beeinflussung eines Bremsdruckes" stets die Steuerung und/oder Regelung eines Bremsdruckes verstanden.

Erfindungsgemäß ist ein System zur Beeinflussung eines Bremsdruckes eines Fahrzeugs, insbesondere eines Schienenfahrzeugs, vorgesehen, wobei das System eine Vorrichtung mit einer Eintrittsöffnung, die dazu ausgebildet ist, mit einem Druckspeicher verbunden zu werden, einer Austrittsöffnung, die dazu ausgebildet ist, mit einer Bremseinrichtung zu deren Betätigung, verbunden zu werden, und mit mindestens zwei Stellgliedern, die zwischen der Eintrittsöffnung und der Austrittsöffnung angeordnet sind und die dazu ausgebildet sind, einen Bremsdruck zwischen der Eintrittsöffnung und der Austrittsöffnung zu beeinflussen, aufweist. Die mindestens zwei Stellglieder stammen aus der Gattung der Relais- und Kolbenventile, der Relais- und Membranventile oder der Relaisventile und Ventile einer sonstigen Gattung.

So kann vorzugsweise eine Regelung des Bremsdruckes mit Hilfe des einen oder anderen Stellgliedes erfolgen.

Vorzugsweise sind die Stellglieder dazu ausgebildet, den Bremsdruck mittels eines Steuer- oder Regelverfahrens zu beeinflussen. Die Stellglieder sind hierzu vorzugsweise als Teil einer Steuerung oder eines Regelkreises ausgebildet, die/der ausgebildet ist, den Bremsdruck entsprechend von Vorgabe- bzw. Sollgrößen zu beeinflussen.

Vorzugsweise handelt es sich bei dem Bremsdruck um einen pneumatischen Druck und die Stellglieder sind als pneumatische Stellglieder ausgebildet. Es sind jedoch auch andere Ausführungsformen denkbar, die anstatt Druckluft mit einem anderen Medium arbeiten. So kann die Erfindung auch zur Beeinflussung von hydraulischen Bremsdrücken verwendet werden.

Vorzugsweise stehen die mindestens zwei Stellglieder parallel und/oder in Reihe miteinander in Verbindung.

Darüber hinaus sind weitere Schaltungskombinationen denkbar. So können vorzugsweise Parallel- und Reihenschaltungen kombiniert sein. Zudem können Stellglieder nicht nur für ein Drehgestell eines Fahrzeugs oder einen gesamten Wagen, sondern vorzugsweise für jeden Radsatz und besonders bevorzugt bei Einzelradaufhängung für jedes Rad, oder aber auch für jeden Bremsaktuator vorgesehen sein.

Vorzugsweise sind die mindestens zwei Stellglieder der Gattung der Relais- und/oder Kolben- und/oder Membranventile und/oder einer sonstigen Gattung zuzuordnen.

Vorzugsweise sind weiterhin mindestens zwei Stellglieder, wenn sie gattungsgleich und/oder identisch sind, parallel geschaltet. Unter identischen Stellgliedern sind hier Stellglieder zu verstehen, die z.B. baugleich sind, oder die sich in einer Eigenschaft, wie beispielsweise maximale Durchflussleistung, Schaltgeschwindigkeit, etc., die für die Verwendung der Ventile maßgeblich ist, gleichen. So sind hier unter identischen Ventilen z.B. auch Ventile zu verstehen, die gleiche Leistungen erlauben, wenn die Leistung maßgeblich ist.

So kann vorteilhafterweise erreicht werden, dass das Schaltverhalten einer bestimmten Gattung auf mehrere Zweige der Vorrichtung verteilt wird, so dass diese Zweige unabhängig voneinander geschaltet werden können.

Mit den unterschiedlichen Gattungen sind stets Vor- und Nachteile im Verhalten, insbesondere im Übertragungsverhalten der Stellglieder, verbunden. Relaisventile, welche üblicherweise über einen Steuerdruck geschaltet werden, aufgrund dessen sie einen entsprechenden Arbeitsdruck einregeln, haben den Vorteil, dass mit ihnen weiche Druckverläufe, aufgrund einer internen Dämpfungswirkung, zwischen zwei Druckniveaus realisiert werden können. Weiterhin ist dies mit relativ geringen (Schalt-) Spielzahlen möglich. Nachteilig stellt sich jedoch dar, dass Relaisventile ein vergleichsweise träges Schaltverhalten aufweisen und auch Druckrampen nur mit begrenzten Steigungen im Vergleich zu anderen Ventilarten realisierbar sind, weshalb andere Gattungen ihnen beispielsweise bei Anwendungen, die eine hohe Be- und Entlüftungsleistung erfordern, vorzuziehen sind. Daher wird diese Gattung insbesondere nicht für Gleitschutzregelungen eingesetzt.

Weiterhin sind Membranventile bekannt, die sich durch kurze Reaktionszeiten und somit eine hohe Dynamik auszeichnen. Diese Ventile sind zudem geeignet, hohe Be- und Entlüftungsleistungen sowie hohe Leistungsdichten zu realisieren. Ein Nachteil dieser Ventilgattung besteht in den relativ harten Drucksprüngen, die während des Schaltens entstehen, wodurch Nachteile in Komfort und Lebensdauer entstehen können. Zudem können mit diesen Ventilen in der Regel nur zwei Zustände (offen/geschlossen) realisiert werden, was bei einer Regelung eines Druckes möglicherweise zu einer erhöhten Schaltspielzahl führen kann.

Hinsichtlich Vor- und Nachteilen können weiterhin Kolbenventile den Membranventilen zugeordnet werden. Auch diese zeichnen sich beispielsweise durch eine hohe Dynamik aus.

Die Vorrichtung weist ferner vorzugsweise ein Gehäuse mit der Eintrittsöffnung und der Austrittsöffnung, besonders bevorzugt mit mehreren Eintritts- und Austrittsöffnungen auf, wobei in dem Gehäuse die Stellglieder angeordnet sind.

So kann die Vorrichtung, bei einem entsprechend ausgebildeten Gehäuse, leicht gegen Umwelteinflüsse geschützt werden, wobei vorteilhafterweise die Montage der Vorrichtung erleichtert wird, da lediglich ein Bauteil anstatt mehrerer Bauteile montiert werden muss.

Die Vorrichtung weist vorzugsweise mindestens ein Steuermittel auf, das dazu ausgebildet ist, mindestens eines der mindestens zwei Stellglieder zu steuern und/oder zu regeln, um den Bremsdruck zu beeinflussen.

Das entsprechende Steuermittel weist vorzugsweise einen Microcontroller auf, der ein Steuerverfahren, definiert durch einen Programmcode, abarbeitet und der besonders bevorzugt dazu ausgebildet ist, mittels Änderungen an diesem Programmcode, ein anderes Verfahren auszuführen. So ist vorteilhafterweise eine einfache Änderung der Regelstrategie der entsprechenden Steuermittel möglich.

Zur Änderung des Programmcodes sind vorzugsweise Schnittstellen vorgesehen, so dass beispielsweise eine Änderung über eine Schnittstelle, beispielsweise eine BUS-Schnittstelle, erfolgen kann, indem neuer Programmcode über einen im Fahrzeug vorhandenen Daten-BUS auf das Steuermittel übertragen werden kann. Alternativ oder zusätzlich erfolgt die Übertragung vorzugsweise über eine Schnittstelle, die an einem Gehäuse des Steuermittels vorgesehen ist.

Die Vorrichtung weist ferner vorzugsweise mindestens ein Erfassungsmittel, insbesondere als Sensor ausgebildet, auf, das dazu ausgebildet ist, Zustandsgrößen der mindestens zwei Stellglieder und/oder des Fahrzeugs zu erfassen.

Erfasst werden können so beispielsweise vorhandene Bremsdrücke, um sie anschließend durch die Stellglieder zu beeinflussen, oder die Fahrzeuggeschwindigkeit und/oder eine Raddrehzahl, aufgrund dessen der anliegende Bremsdruck verändert werden kann.

Erfindungsgemäß weist das System ferner eine Steuervorrichtung zur Auswahl von Stellgliedern der oben beschriebenen Vorrichtung, auf, mit einem Steuermittel, das dazu ausgebildet ist, eine Auswahl der zu steuernden Stellglieder zwischen der Eintrittsöffnung und der Austrittsöffnung zu treffen, und mit mindestens einer Eingangsschnittstelle, die dazu ausgebildet ist, Werte mindestens einer Zustandsgröße der Vorrichtung und/oder des Fahrzeugs zu empfangen, und mit mindestens einer Ausgangsschnittstelle, die dazu ausgebildet ist, Steuergrößen an die Vorrichtung, insbesondere an das mindestens eine Steuermittel, zu übertragen.

Das Steuermittel kann dabei vorzugsweise einen Microcontroller aufweisen, oder es befindet sich besonders bevorzugt in Form von Programmcode auf einem bereits vorhandenen Microcontroller. Ist das Steuermittel als separates Element ausgeführt, so kann es vorzugsweise in die oben beschriebene Vorrichtung, insbesondere in ein möglicherweise vorhandenes Gehäuse der Vorrichtung, integriert sein.

Das Steuermittel, insbesondere der Microcontroller, ist vorzugsweise zur Steuerung der erfindungsgemäßen Vorrichtung ausgebildet.

So können vorteilhafterweise unterschiedliche Stellglieder, wie sie oben beschrieben sind, sinnvoll und situationsgerecht ausgewählt werden.

Vorzugsweise verfügt die Steuervorrichtung über mindestens eine Eingangsschnittstelle, die dazu ausgebildet ist, Werte elektronisch und/oder digital, insbesondere über eine BUS-Verbindung, und/oder über Erfassungsmittel, insbesondere der oben beschriebenen Vorrichtung, zu empfangen.

Erfassungsmittel, insbesondere Sensoren, sind dabei vorzugsweise solche, welche bereits am Fahrzeug vorgesehen sind und auf deren Werte nun auch die Steuervorrichtung Zugriff erhält.

Die Steuervorrichtung kann so vorteilhafterweise auf Informationen des Fahrzeugs, wie beispielsweise die Fahrzeuggeschwindigkeit, den Radschlupf, die aktuelle Bremskraft und dergleichen zugreifen und daraus einen Fahrzeugzustand bestimmen, anhand dessen sie anschließend vorzugsweise eine Regelstrategie wählen und eine entsprechende Auswahl der Stellglieder treffen kann.

Vorzugsweise sind weiterhin Erfassungsmittel, insbesondere Sensoren, die zur Ermittlung von mindestens einer Zustandsgröße der Vorrichtung und/oder des Fahrzeugs ausgebildet sind, vorgesehen. Über diese erhält die Steuervorrichtung vorzugsweise Werte, welche nicht bereits durch schon vorhandene Erfassungsmittel zur Verfügung stehen.

Erfindungsgemäß ist ferner das System zur Beeinflussung eines Bremsdruckes eines Fahrzeugs vorgesehen, das mindestens eine oben beschriebene Vorrichtung und mindestens eine oben beschriebene Steuervorrichtung aufweist. Dabei ist die mindestens eine Steuervorrichtung dazu ausgebildet, die Vorrichtung, insbesondere deren Stellglieder, direkt oder indirekt über dazu ausgebildete Steuermittel, zu beeinflussen, um einen Bremsdruck zu steuern und/oder zu regeln.

Die Steuervorrichtung steht dabei mit der Vorrichtung derart in Verbindung, dass sie diese, vorzugsweise elektronisch, steuern und/oder regeln kann.

So kann vorteilhafterweise in ein vorhandenes Fahrzeug mit einem vorhandenen Bremssystem ein derartiges System integriert werden, wodurch das vorhandene Bremssystem in die Lage versetzt wird, den oben beschriebenen Zielkonflikt zu bewältigen und entsprechend unterschiedliche Bremsregelungen unter Einsatz unterschiedlicher Stellglieder durchzuführen.

Vorzugsweise ist die Steuervorrichtung in dieser Ausführungsform in die Vorrichtung integriert, so dass sich eine kompakte bauliche Einheit ausbilden lässt.

In einer anderen Ausführungsform des erfindungsgemäßen Systems sind Vorrichtung und Steuervorrichtung in einem gemeinsamen Gehäuse integriert.

Erfindungsgemäß ist weiterhin ein Bremssystem zur Beeinflussung eines pneumatischen Bremsdruckes eines Fahrzeugs vorgesehen, das ein zuvor beschriebenes System, mindestens eine Bremseinrichtung, die dazu ausgebildet ist, über das System angesteuert zu werden, und mindestens einen Druckspeicher, der dazu ausgebildet ist, ein Druckmedium an das System zur Verfügung zu stellen, aufweist.

System, Bremseinrichtung und Druckspeicher stehen dabei vorzugsweise über Leitungen, insbesondere über pneumatische oder hydraulische Leitungen, in Verbindung.

So kann vorteilhafterweise ein Fahrzeug mit einem derartigen Bremssystem aufgerüstet werden, oder das Bremssystem als solches in neue Fahrzeuge verbaut werden.

Erfindungsgemäß ist weiterhin ein Verfahren zur Beeinflussung, insbesondere zur Regelung, eines Bremsdruckes mit einer oben beschriebenen Steuervorrichtung vorgesehen, das die Schritte "Auswählen einer Granularität" und "Auswählen einer Strategie" durchführt und anschließend die Beeinflussung des Bremsdruckes durchführt.

Dies erfolgt vorzugsweise auf Basis der vorliegenden Informationen, die besonders bevorzugt an die Steuervorrichtung übermittelt werden. Ist eine Auswahl für Granularität und Strategie getroffen, erfolgt in einem weiteren Schritt die Durchführung der Beeinflussung des Bremsdruckes durch die Steuermittel und/oder die Stellglieder.

Die Auswahl der Granularität wird dabei insbesondere hinsichtlich der Ansteuerweise einzelner Bremseinrichtungen, insbesondere mittels einzelner Stellglieder, charakterisiert, und beinhaltet zumindest rad-, radsatz-, drehgestell-, wagen- und/oder aktuatorweise Granularitäten.

Die Strategie wiederum beschreibt wie die Beeinflussung des Bremsdruckes zu erfolgen hat. D.h. es wird festgelegt, ob beispielsweise eine starke Bremsung, bis hin zu einer Notbremsung, eine komfortable Bremsung oder eine gleitschutzgeregelte Bremsung erfolgt.

Ferner erfolgt bei der Auswahl der Strategie eine Auswahl der einzusetzenden Stellglieder, um die Beeinflussung des Bremsdruckes zu realisieren. Die Stellglieder werden, entsprechend der Art der Bremsung bzw. entsprechend der Art der Beeinflussung des Bremsdruckes, nach ihrer Gattung und/oder nach ihren Eigenschaften ausgewählt. Die Gattung ist, wie oben beschrieben, mit Vor- und Nachteilen verbunden. So werden vorzugsweise bei einer Notbremsung Stellglieder einer Gattung ausgewählt, die verhältnismäßig schnell ansprechen, wohingegen bei einer normalen Betriebsbremsung vorzugsweise Stellglieder einer Gattung ausgewählt werden, die eine insbesondere für Passagiere verhältnismäßig komfortable Beeinflussung des Bremsdruckes ermöglichen.

Ein weiterer Schritt des Verfahrens besteht vorzugsweise in der Prüfung, ob eine Gleitschutzanforderung vorliegt. Ist dies der Fall, wird die Abarbeitung des hier beschriebenen Verfahrens beendet und es wird vorzugsweise auf eine sicherheitsrelevante Regelung, besonders bevorzugt auf eine Gleitschutzregelung, gewechselt. Ist die Bremsung beendet, wird das erfindungsgemäße Verfahren ebenfalls beendet. Dieser Schritt ist jedoch optional. Eine Gleitschutzregelung kann auch durch das erfindungsgemäße Verfahren durchgeführt werden.

Vorzugsweise ist ein weiterer Schritt vorgesehen, in dem ein Einstellen eines Druckniveaus innerhalb der Vorrichtung mittels mindestens eines Stellgliedes, das vorzugsweise mit der Eintrittsöffnung in Verbindung steht, durchgeführt wird.

Dabei wird vorzugsweise ein Druckniveau geschaffen, das an zumindest einem Stellglied anliegt, das dazu ausgebildet ist, den Druck an zumindest einer Austrittsöffnung der Vorrichtung einzustellen. Dieses Stellglied kann den Druck an der zumindest einen Austrittsöffnung ausgehend von diesem Druckniveau einstellen. Somit kann an der Austrittsöffnung ein Maximaldruck eingestellt werden, welcher diesem Druckniveau entspricht. Von diesem Maximaldruck ausgehend kann auch ein niedrigerer Druck an der Austrittsöffnung eingestellt werden.

Alternativ oder zusätzlich erfolgt ein Einstellen eines Solldruckes an mindestens einer Austrittsöffnung mittels mindestens eines Stellgliedes, das vorzugsweise mit der Austrittsöffnung in Verbindung steht.

Der Solldruck entspricht dabei einem gewünschten Druck, welcher an zumindest einer Austrittsöffnung anliegen soll.

Vorzugsweise erfolgt das Einstellen des Druckniveaus innerhalb der Vorrichtung dadurch, dass das mindestens eine Stellglied, das vorzugsweise mit der Eintrittsöffnung in Verbindung steht, in eine Durchlassstellung geschaltet wird.

Alternativ oder zusätzlich erfolgt das Einstellen des Solldruckes dadurch, dass das mindestens eine Stellglied, das vorzugsweise mit der Austrittsöffnung in Verbindung steht, in eine Durchlassstellung geschaltet wird.

Das jeweilige Stellglied steht dabei vorzugsweise direkt mit der Eintritts- oder Austrittsöffnung in Verbindung oder es sind Zwischenelemente, wie weitere Stellglieder, zwischen dem jeweiligen Stellglied und der Eintritts- oder Austrittsöffnung vorgesehen.

Das Einstellen des Druckniveaus mittels in Durchlassstellung geschalteter Stellglieder reduziert dabei vorteilhafterweise die Schaltspielzahlen.

Erfindungsgemäß ist weiterhin ein Computerprogrammprodukt mit einem auf einem maschinenlesbaren Träger gespeichertem Programmcode vorgesehen, wobei der Programmcode dazu ausgebildet ist, wenn er auf einer elektronischen Datenverarbeitungsanlage, wie einer Steuervorrichtung, vorzugsweise einer erfindungsgemäßen Steuervorrichtung, einem Steuermittel, einem Microcontroller, einem FPGA oder einer hardwarenahen Ausprägung der Datenverarbeitungsanlage, in einem Fahrzeug ausgeführt wird, das Fahrzeug, eine erfindungsgemäße Vorrichtung oder Steuervorrichtung dazu zu bringen, das oben beschriebene Verfahren durchzuführen.

Die vorliegende Erfindung ist nicht auf die oben beschriebenen Merkmale beschränkt, vielmehr sind weitere Ausführungsformen denkbar, die ebenfalls in den beanspruchten Schutzbereich dieser Anmeldung fallen, welche durch Vertauschung oder neue Kombination einzelner Merkmale erhalten werden können. Beispielsweise können in dem beschriebenen Verfahren einzelne Schritte vertauscht werden oder auch mehrmals abgearbeitet werden. Beispielsweise kann eine Auswahl der Strategie auch nach der Auswahl der Granularität erfolgen. Weiterhin kann anstelle von Druckluft auch ein anderes Druckmedium, beispielsweise ein anderes Gas, oder ein flüssiges Medium, insbesondere Öl, verwendet werden.

Nachfolgend erfolgt die Beschreibung bevorzugter Ausführungsformen der Erfindung anhand der beigefügten Zeichnungen.

Im Einzelnen zeigt:
- Fig. 1:: eine Prinzipdarstellung einer erfindungsgemäßen Vorrichtung,
- Fig. 2:: eine Prinzipdarstellung eines erfindungsgemäßen Systems,
- Fig. 3:: ein Ablaufdiagramm des erfindungsgemäßen Verfahrens,
- Fig. 4:: ein weiteres Ablaufdiagramm des erfindungsgemäßen Verfahrens.

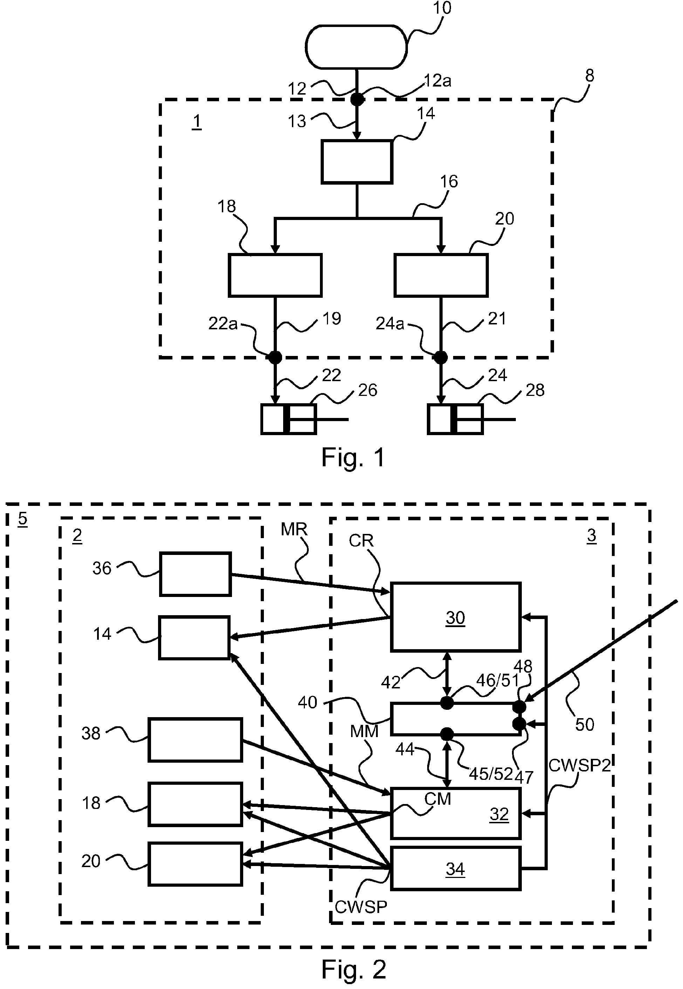

**Fig.** 1 zeigt eine Prinzipdarstellung einer erfindungsgemäßen Vorrichtung 1. Es ist ein Druckspeicher 10, insbesondere ein Druckluftspeicher, gezeigt, der über eine Versorgungsleitung 12, die mit einer Eintrittsöffnung 12a eines Gehäuses 8 der Vorrichtung 1 in Verbindung steht, verbunden ist. Durch den Druckspeicher 10 wird die Vorrichtung 1 mit einem Druckmedium, nachfolgend als Druckluft bezeichnet, versorgt. Es sind jedoch auch andere Ausführungsformen denkbar, in denen andere Medien eingesetzt werden.

Der Druckspeicher 10 muss dabei nicht wie dargestellt direkt mit der Vorrichtung 1 verbunden sein. Stattdessen kann er auch mit mehreren Vorrichtungen 1 verbunden sein, wobei die Verbindung dann beispielsweise über eine sich verzweigende Versorgungsleitung 12 realisiert ist.

Innerhalb der Vorrichtung 1 ist ein Relaisventil 14 angeordnet, welches Druckluft über eine Verbindungsleitung 13 erhält, welche sich an die Eintrittsöffnung 12a anschließt. Das Relaisventil 14 ist dazu ausgebildet, aufgrund eines Steuersignals in Form eines Steuerdrucks eine Verbindung zwischen der Eintrittsöffnung 12a und einer nachgeordneten Verbindungsleitung 16 herzustellen. Das Relaisventil 14 ist dazu ausgebildet einen Druck aus der Versorgungsleitung 12 in die Verbindungsleitung 16 zu leiten. Ferner ist das Relaisventil 14 dazu ausgebildet, die Verbindungsleitung 16 zu entlüften, um einen bestehenden Druck in der Verbindungsleitung 16 zu reduzieren. Auf die Darstellung einer Leitung zur Zuführung des Steuerdrucks an das Relaisventil 14 sowie Leitungen und Öffnungen zur Entlüftung wurde in dieser Zeichnung verzichtet.

Die Verbindungsleitung 16 weist eine Verzweigung in zwei Äste auf, wobei beide Äste mit jeweils einem Membranventil 18, 20 in Verbindung stehen.

In weiteren nicht gezeigten Ausführungsformen können auch weitere Verzweigungen der Verbindungsleitung 16 vorgesehen sein. Zudem sind auch weitere Vorrichtungen denkbar, in denen sich auch die Versorgungsleitung 12 verzweigt und beispielsweise mehrere Relaisventile 14 versorgt.

Die Membranventile 18, 20 sind ihrerseits über Verbindungsleitungen 19, 21 mit Austrittsöffnungen 22a, 24a, welche am Gehäuse 8 der Vorrichtung 1 vorgesehen sind, mit Bremsleitungen 22, 24 verbunden, wobei die Membranventile 18, 20 dazu ausgebildet sind, einen Druck von der Verbindungsleitung 16 in die jeweiligen Bremsleitungen 22, 24 zu leiten. Ferner sind die Membranventile 18, 20 dazu ausgebildet, die Bremsleitungen 22, 24 zu entlüften, um einen bestehenden Druck in den Bremsleitungen 22, 24 zu reduzieren.

Als Alternative zu den Membranventilen 18, 20 können hier beispielsweise auch Kolbenventile vorgesehen sein.

Die Bremsleitungen 22, 24 stehen mit den Austrittsöffnungen 22a, 24a des Gehäuses 8 der Vorrichtung 1 in Verbindung. Ihnen nachgelagert sind zwei Bremszylinder 26, 28 angeordnet, wobei die Bremszylinder 26, 28 über die Bremsleitungen 22, 24 zur Aktivierung bzw. Betätigung mit Druckluft versorgt werden können bzw. wieder entlüftet werden können, um die Bremsen zu lösen.

Die Bremszylinder 26, 28 sind dazu ausgebildet, die Bremsen (nicht dargestellt) des Fahrzeugs zu betätigen. Dies erfolgt dadurch, dass Druckluft über die Bremsleitungen 22, 24 in die Bremszylinder 26, 28 geleitet wird. Zum Lösen der Bremsen wird die Luft wieder aus den Bremszylindern 26, 28 abgelassen.

Die in Fig. 1 dargestellte Vorrichtung 1 stellt lediglich einen allgemeinen Fall der Erfindung dar. Das bevorzugte Einsatzgebiet der erfindungsgemäßen Vorrichtung 1 ist der Schienenfahrzeugbau. Schienenfahrzeuge weisen in der Regel mehrere Radsätze auf, die aus einem linken und einem rechten Rad bestehen, welche auf einer gemeinsamen Achse angeordnet sind. Für gewöhnlich sind mehrere Radsätze zusammengefasst an Drehgestellen angeordnet, wobei ein solches Drehgestell mit einem darüber liegenden Wagenkasten in Verbindung steht. Die in dieser Darstellung gezeigte Vorrichtung 1 kann daher auch so ausgebildet sein, dass über die Bremsleitungen 22, 24 Drücke an einzelne Drehgestelle zur Verfügung gestellt werden, wobei sich die Leitungen dort auf mehrere Bremszylinder 26, 28 verteilen. Weiterhin können auch mehr als die hier gezeigten zwei Membranventile 18, 20 vorgesehen sein, welche beispielsweise jeweils einzelne Bremszylinder 26, 28 ansteuern. Auch sind darüber hinaus weitere Anordnungen bzw. Verschaltungen der Stellglieder 14, 18, 20 denkbar.

So können verschiedene Bremskonzepte beeinflusst werden. Insbesondere sind hier Konzepte denkbar, bei denen radweise, aktuatorweise, radsatzweise, drehgestellweise oder wagenweise gebremst wird, wobei bei radsatzweiser Bremsung eine Bremse eine gemeinsame Achse eines Radsatzes bremst.

Die dargestellte Vorrichtung 1 zeigt zwei Stufen, die die Druckluft zu durchströmen hat, um vom Druckspeicher 10 bis zu den Bremszylindern 26, 28 zu gelangen. Die erste Stufe wird durch das Relaisventil 14 gebildet, die zweite Stufe durch die Membranventile 18, 20. Hier sind weitere nicht gezeigte Ausführungsformen denkbar. Beispielsweise können beide Stufen vertauscht sein, so dass die Druckluft zunächst in ein Membranventil oder Kolbenventil und anschließend in zwei parallel angeordnete Relaisventile strömt. Darüber hinaus ist es auch möglich weitere Stufen vor, zwischen oder nach den gezeigten Stufen und andere oder weitere Ventilarten und/oder Ventilgattungen vorzusehen.

Beispielsweise können an den Bremsleitungen 22, 24 auch drehgestellweise Verteiler angeschlossen sein, die einen Bremsdruck der Bremsleitungen 22, 24 ihrerseits auf die Radsätze des jeweiligen Drehgestells verteilen. Auch das Vorsehen weiterer Bremsleitungen ist denkbar, um weitere Bremseinrichtungen zu versorgen.

In Fig. 2 ist eine Prinzipdarstellung eines erfindungsgemäßen Systems 5 gezeigt. Dabei ist eine Unterteilung in einen pneumatischen Teil 2 sowie einen elektronischen Teil 3 gezeigt.

Das System 5 weist dabei insbesondere eine erfindungsgemäße Vorrichtung 1 nach Fig. 1 sowie eine erfindungsgemäße Steuervorrichtung 40 auf. Die Vorrichtung 1 ist dabei nicht wie in Fig. 1 dargestellt. Aus Gründen der Übersichtlichkeit sind hier nur die relevanten Elemente aus Fig. 1 übernommen.

Der pneumatische Teil 2 beinhaltet die in Fig. 1 gezeigten Stellglieder der Vorrichtung 1, im Einzelnen das Relaisventil 14 und die Membranventile 18, 20. Auf eine Darstellung der pneumatischen Verbindungen aus Fig. 1 wurde hier aus Gründen der Übersichtlichkeit verzichtet. Weiterhin weist der pneumatische Teil 2 Erfassungsmittel 36, 38 auf, die dazu ausgebildet sind, Informationen der einzelnen Stellglieder 14, 18, 20 zu ermitteln und zur Verfügung zu stellen. Bei den Erfassungsmitteln 36, 38 handelt es sich üblicherweise um Sensoren, die zur Ermittlung von Informationen in Form von Zustandsdaten der entsprechenden Stellglieder 14, 18, 20, wie beispielsweise Öffnungsgraden oder anliegenden Drücken, ausgebildet sind. Üblicherweise sind den unterschiedlichen Gattungen von Stellgliedern 14, 18, 20 unterschiedliche Erfassungsmittel 36, 38 zugeordnet. In der gezeigten Darstellung ist dem

Relaisventil 14 das Erfassungsmittel 36 und den Membranventilen 18, 20 das Erfassungsmittel 38 zugeordnet. In einer weiteren nicht gezeigten Ausführungsform ist jedem Membranventil 18, 20 bzw. jedem Stellglied ein eigenes Erfassungsmittel zugeordnet.

An dieser Stelle sei angemerkt, dass der pneumatische Teil 2 auch durch einen hydraulischen Teil ergänzt oder ersetzt werden kann, was jedoch den Gegenstand der Erfindung nicht beschränkt.

Der elektronische Teil 3 beinhaltet Steuermittel 30, 32, wie beispielsweise eine Recheneinheit, insbesondere einen Microcontroller, und/oder Magnetventile und/oder Vorsteuerventile, die dazu ausgebildet sind, die entsprechenden Stellglieder 14, 18, 20, anzusteuern. Auch die Steuermittel 30, 32 sind in dieser Darstellung den entsprechenden Gattungen der Stellglieder 14, 18, 20 zugeordnet. So steuert das Steuermittel 30 das Relaisventil 14 und das Steuermittel 32 die Membranventile 18, 20. Hierfür sind die Steuerverbindungen CR, CM, beispielsweise in Form von Steuerleitungen pneumatischer und/oder elektrischer Art, vorgesehen. In einer weiteren nicht gezeigten Ausführungsform ist jedem Membranventil 18, 20 bzw. jedem Stellglied ein eigenes Steuermittel zugeordnet.

Ferner erhalten die Steuermittel 30, 32 Informationen über die einzelnen Stellglieder 14, 18, 20 von den entsprechenden Erfassungsmitteln 36, 38. So wird das Steuermittel 30, das das Relaisventil 14 steuert, über die Datenverbindung MR mit Informationen über das Relaisventil 14 versorgt. In gleicher Weise wird das Steuermittel 32, welches die Membranventile 18, 20 steuert, über die Datenverbindung MM mit Informationen über die Membranventile 18, 20 versorgt. Diese Informationen bilden somit jeweils eine Rückkopplungsschleife, wodurch eine Regelung der Stellglieder 14, 18, 20 durch die Steuermittel 30, 32 ermöglicht wird.

Weiterhin ist in dem elektronischen Teil 3 die Steuervorrichtung 40 vorgesehen, welche in der Darstellung zwischen den Steuermitteln 30, 32 angeordnet ist.

Die Steuervorrichtung 40 weist mehrere Schnittstellen 45, 46, 47, 48, 51, 52 auf, über die die Steuervorrichtung 40 Informationen des Fahrzeugs, insbesondere in Form von elektronischen Daten, erhalten kann und/oder auch Informationen oder Steuerbefehle abgeben kann. Darüber hinaus weist die Steuervorrichtung 40 ein Steuermittel auf, das es der Steuervorrichtung 40 erlaubt, erhaltene Informationen zu verarbeiten und entsprechende Steuerbefehle abzugeben.

Die Steuervorrichtung 40 weist in der gezeigten Ausführungsform keine direkte Verbindung zu dem pneumatischen Teil 2 auf, jedoch sind Steuerverbindungen 42, 44 vorhanden, über die die Steuervorrichtung 40 einerseits die Steuermittel 30, 32 anzusteuern vermag und andererseits auf deren Informationen aus den Erfassungsmitteln 36, 38 zugreifen kann. Dazu sind die Steuerverbindungen 42, 44 mit den Schnittstellen, insbesondere den Eingangsschnittstellen 45, 46 und den Ausgangsschnittstellen 51, 52 der Steuervorrichtung 40 in Verbindung.

Zudem verfügt die Steuervorrichtung 40 über eine Steuer- und Datenverbindung 50, mit der sie weitere Informationen bzw. Befehle aus dem Fahrzeug erhalten kann. Diese Datenverbindung 50 steht mit der Steuervorrichtung 40 über die Eingangsschnittstelle 48 in Verbindung.

Die Steuervorrichtung 40 ist dazu ausgebildet, als intelligentes Schaltmittel eine Auswahl bzw. eine Regelstrategie der einzelnen Stellglieder 14, 18, 20, also Granularität und Strategie, zu treffen. Dies erfolgt auf Basis der erhaltenen Informationen über die Steuer- und Datenverbindungen 42, 44, 50. Da keine direkte Verbindung zu den Stellgliedern 14, 18, 20 besteht, kann eine Regelung indirekt durch einen Triggerbefehl an die entsprechenden Steuermittel 30, 32 erfolgen.

In einer weiteren, nicht gezeigten Ausführungsform ist die Steuervorrichtung 40 dazu ausgebildet, die Stellglieder 14, 18, 20 direkt über eigene Steuerverbindungen anzusteuern. Dies kann alternativ oder zusätzlich zur oben beschriebenen Ansteuerung erfolgen.

Weiterhin ist ein Steuermittel 34 in dem elektronischen Teil 3 vorgesehen, welches über Steuerverbindungen CWSP zu allen Stellgliedern 14, 18, 20 sowie über eine Steuerverbindung CWSP2 zu den weiteren Steuermitteln 30, 32 und der Steuervorrichtung 40 verfügt. Es ist somit eine direkte Ansteuerung der Stellglieder 14, 18, 20 durch das Steuermittel 34, als auch eine indirekte Ansteuerung über eine Beeinflussung der weiteren Steuermittel 30, 32 und der Steuervorrichtung 40 möglich.

Das Steuermittel 34 ist somit dazu ausgebildet, sämtliche Stellglieder 14, 18, 20 zu steuern und/oder zu regeln, und gleichzeitig die weiteren Steuermittel 30, 32 und die Steuervorrichtung 40 zu beeinflussen. Das Steuermittel 34 ist dazu ausgebildet, eine Gleitschutzregelung für das Fahrzeug durchzuführen, wobei es über die Steuerverbindung CWSP2 in der Lage ist, die Steuermittel 30, 32 und die Steuervorrichtung 40 beispielsweise zu deaktivieren, oder so zu beeinflussen, dass eine Gleitschutzregelung nicht durch deren Steuereingriffe gefährdet wird.

Die Steuermittel 30, 32, 34 und das Steuermittel der Steuervorrichtung 40 sind beispielsweise als separate Elemente zur Datenverarbeitung, insbesondere als Microcontroller oder auch als einzelne Regelalgorithmen auf einem gemeinsamen Steuergerät ausgebildet.

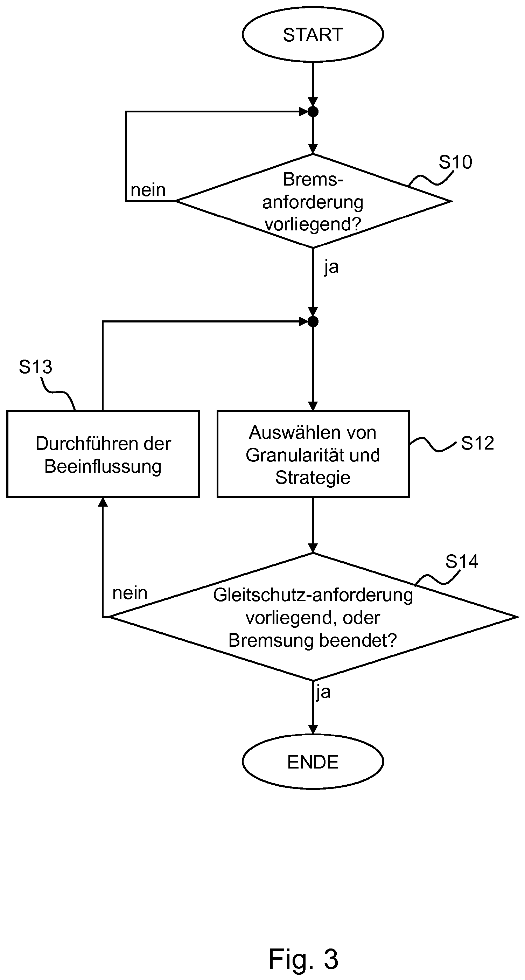

In Fig. 3 ist ein Ablaufdiagramm des erfindungsgemäßen Verfahrens dargestellt. Zunächst wird in einem Schritt S10 überprüft, ob eine Bremsanforderung vorliegt. Diese Überprüfung erfolgt beispielsweise während der Fahrt kontinuierlich. Liegt eine Bremsanforderung vor, so wechselt das Verfahren in Schritt S12, in dem das Auswählen einer entsprechenden Strategie sowie Granularität auf Basis zugrunde liegender Information des Betriebszustands der Bremse bzw. des Fahrzeugs erfolgt.

Im Anschluss daran wird in Schritt S14 überprüft, ob eine Gleitschutzanforderung vorliegt, die einen Abbruch des erfindungsgemäßen Verfahrens zur Folge hätte, wobei im Anschluss auf eine (nicht dargestellte) Gleitschutzregelung gewechselt werden würde. Gleichzeitig wird in Schritt S14 überprüft, ob nach wie vor eine Bremsanforderung vorliegt, oder ob die Bremsung beendet ist. In diesem Fall würde das Verfahren ebenfalls beendet werden, allerdings ohne auf eine Gleitschutzregelung zu wechseln. Schritt S14 ist dabei als optional zu betrachten. D.h. es gibt Ausführungsformen der Erfindung, die auch zur Durchführung einer Beeinflussung des Bremsdruckes hinsichtlich Gleitschutz ausgebildet sind.

Werden die Abfragen in Schritt S14 verneint, so wechselt der Ablauf des Verfahrens auf Schritt S13, worin die Durchführung der Beeinflussung des Bremsdruckes auf Basis der in Schritt S12 festgelegten Granularität und Strategie erfolgt.

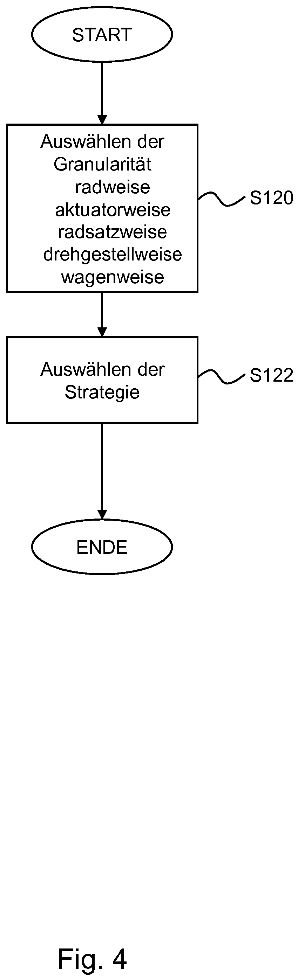

**In** **Fig.** 4 ist der Ablauf des Schrittes S12 genauer dargestellt.

In Schritt S120 erfolgt zunächst die Auswahl der Granularität, beispielsweise aktuatorweise, radweise, radsatzweise, drehgestellweise und/oder wagenweise.

Anschließend wird eine Auswahl der Strategie mit der die Beeinflussung des Bremsdruckes durchgeführt werden soll in Schritt S122 getroffen. Ferner beinhaltet der Schritt S122 die Auswahl der Stellglieder, die für die Beeinflussung des Bremsdruckes verwendet werden sollen. Diese Auswahl erfolgt nach der Gattung der Stellglieder, wobei situationsabhängig andere Gattungen von Stellgliedern gewählt werden. Ist beispielsweise eine Notbremsung durchzuführen, so werden Stellglieder gewählt, die nach ihrer Gattung einen schnellen Aufbau des Bremsdruckes zulassen. Soll eine normale Betriebsbremsung erfolgen, so werden Stellglieder gewählt, die nach ihrer Gattung eine Beeinflussung des Bremsdruckes erlauben, um eine komfortable Bremsung zu realisieren.

Grundsätzlich können die Schritte S120 und S122 jedoch auch in umgekehrter Reihenfolge abgearbeitet werden.

Diese relativ allgemein gehaltene Ablaufstruktur kann unterschiedlichste Kombinationen von Granularitäten und Strategien zur Beeinflussung des Bremsdruckes umsetzen, welche nachfolgend anhand bevorzugter Beispiele genauer erläutert werden.

### Radsatzweise Regelung

Bei einer radsatzweisen Regelung ist die Vorrichtung 1 so ausgebildet, dass sie den Bremsdruck einzelner Radsätze beispielsweise eines Drehgestells zu regeln vermag. Bei einer Bremsung sind, basierend auf der Regelstrategie z.B. an den Radsätzen unterschiedliche Bremsdrücke einzustellen, da beispielsweise die Räder des vorderen Radsatzes Nässe von der Schiene entfernen und somit eine geringere Bremskraft übertragen können. Die nachlaufenden Räder finden hingegen eine deutlich trockenere Schiene vor, wodurch sie auch stärker gebremst werden können. Somit bietet sich eine radsatzweise Regelung an.

Eine Möglichkeit, mit der erfindungsgemäßen Vorrichtung 1 aus Fig. 1 eine Regelung umzusetzen, ist, durch das Relaisventil 14 den maximal benötigten Bremsdruck, also den Bremsdruck für den am stärksten zu bremsenden Radsatz bereitzustellen. Dieser liegt nach dem Relaisventil 14 in der Verbindungsleitung 16 an den Membranventilen 18, 20 an. In diesem Beispiel wird angenommen, dass der stärker zu bremsende Radsatz mit dem Bremszylinder 26 in Verbindung steht. Da der Druck in der Verbindungsleitung 16 der benötigte Druck für den am stärksten zu bremsenden Radsatz ist, schaltet dessen Membranventil 18 in eine Durchgangstellung, sodass der Druck, welcher durch das Relaisventil 14 geregelt ist und welcher sich in der Verbindungsleitung 16 befindet, nun direkt und unverändert in die Bremsleitung 22 sowie den Bremszylinder 26 geleitet wird. Der Bremsdruck des Bremszylinders 26 wird somit durch das Relaisventil 14 geregelt. Da der Bremszylinder 28 einen geringeren Bremsdruck benötigt als der Bremszylinder 26, schaltet dessen Membranventil 20 nicht in eine Durchgangsstellung, sondern regelt den benötigten Druck in der Bremsleitung 24 und somit im Bremszylinder 28 ein. Somit kann, ausgehend von einem Druck in der Verbindungsleitung 16, in dem Bremszylinder 28 ein im Vergleich zur Verbindungsleitung 16 niedrigerer Druck eingestellt werden, indem das Membranventil 20 Druckluft nicht oder nur begrenzt durchlässt, oder an die Atmosphäre ablässt und somit den Druck einregelt.

Diese Art der Regelung hat den Vorteil, dass lediglich eines der beiden Membranventile 18, 20 zur exakten Regelung eines Bremsdruckes verwendet wird, wodurch die Schaltspielzahl beider Membranventile 18, 20 insgesamt reduziert wird, wodurch sich ein reduzierter Verschleiß der Komponenten ergibt.

Eine Alternative zur oben beschriebenen Regelung besteht darin, ein bestimmtes Druckniveau in der Verbindungsleitung 16 durch das Relaisventil 14 vorzugeben, wobei anschließend eine Regelung der einzelnen Radsätze durch die Membranventile 18, 20 erfolgt. Das Relaisventil 14 gibt dabei ein Druckniveau vor, welches im Extremfall dem maximal möglichen Druck aus dem Druckspeicher 10 entspricht. Dem Relaisventil 14 fällt dabei eine Vorsteueraufgabe zu, die einen Bremsdruck in der Verbindungsleitung 16 auf ein bestimmtes Niveau hebt. Dies erfolgt aufgrund der Dämpfungseigenschaft des Relaisventils 14 vergleichsweise sanft. Die eigentliche Regelung des Bremsdruckes erfolgt anschließend durch die Membranventile 18, 20, welche auch bei dieser Ausführung weniger Schaltspiele benötigen, da sie lediglich von einem voreingestellter Druckniveau des Relaisventil 14 geringfügig abweichen müssen.

### Aktuatorweise Regelung

In gleicher Weise kann auch eine aktuatorweise Regelung umgesetzt werden, so dass beispielsweise ein Bremsaktuator bzw. ein Bremszylinder mit dem vollen Bremsdruck beaufschlagt wird, wobei weitere Aktuatoren, welche demselben Radsatz zugeordnet sind, geregelt mit Druckluft beaufschlagt werden.

### Regelung bei geringen Unterschieden zwischen den Radsätzen

Sind die Radsätze mit etwa der gleichen Bremskraft zu beaufschlagen, kann ein weiterer Regelansatz gewählt werden. Über das Relaisventil 14 wird ein Druck in der Verbindungsleitung 16 eingestellt, welcher beispielsweise einem maximal benötigten Druck aller Radsätze, welche mit der Vorrichtung 1 in Verbindung stehen, entspricht. Die nachgeschalteten Membranventile 18, 20 regeln lediglich geringe Druckunterschiede aus.

So wird vorteilhafterweise eine schonende bzw. komfortable Bremsung erreicht, welche ebenfalls wenige Schaltspiele der Membranventile 18, 20 benötigt.

### Drehgestellweise Regelung

Sind beispielsweise mehrere Vorrichtungen 1 in dem Fahrzeug vorgesehen, so besteht jeweils die Möglichkeit über die Relaisventile 14 bei entsprechender Anbindung für jedes einzelne Drehgestell ein bestimmtes Druckniveau einzustellen. Ausgehend von diesem Druckniveau erfolgt anschließend die radsatzweise Regelung über die einzelnen Membranventile 18, 20.

### Gleitschutzregelung

Mit der beschriebenen Vorrichtung 1 kann zudem auch eine Gleitschutzregelung umgesetzt werden.

Bei einer Bremsung mit möglichst hoher Verzögerung und/oder bei einem Rad-Schiene-Kontakt mit geringer Übertragungsfähigkeit der Kräfte zwischen Rad und Schiene laufen einzelne Räder bzw. Radsätze Gefahr zu blockieren und über die Schiene zu gleiten, was eine Verringerung der Bremskraft sowie eine Beschädigung von Rad und Schiene mit sich bringen kann. Daher sind derartige Situationen zu vermeiden, was mit einer Gleitschutzregelung erreicht werden kann.

Zu diesem Zweck geht beispielsweise das Relaisventil 14 je nach Bremsanforderung in Durchlassstellung, was zur Folge hat, dass ein definierter Druck, beispielsweise der volle Druck aus dem Druckspeicher 10, über die Versorgungsleitung 12, das Relaisventil 14 und die Verbindungsleitung 16 an den Membranventilen 18, 20 anliegt. So kann im Zweifel der volle Bremsdruck an die Bremszylinder 26, 28 geleitet werden. Die Membranventile 18, 20 regeln nun den in den Bremszylindern 26, 28 benötigten Bremsdruck ein. Diese Regelung hat den Vorteil, dass die schnell ansprechenden Membranventile 18, 20 den Bremsdruck in den Bremsleitungen 22, 24 schnell zwischen einem Maximaldruck, welcher dem Druck aus dem Druckspeicher 10 entspricht, und einem Minimaldruck, welcher Atmosphärendruck entspricht, und entsprechenden Zwischenstufen einstellen können. Somit ist eine schnell ansprechende Regelung des Radschlupfs einzelner Radsätze möglich.

Darüber hinaus können die bis hierhin beschriebenen Regelverfahren nicht nur radsatz- oder drehgestellweise erfolgen. Vielmehr sind weitere Ausprägungen denkbar, wie beispielsweise eine Kombinationen einzelner Verfahren. Auch die Anbindung der Vorrichtung 1 kann auf verschiedene Arten erfolgen, so kann beispielsweise an jeder Bremsleitung 22, 24 ein separates Drehgestell vorgesehen sein, oder es können auch mehrere Membran- oder Kolbenventile vorhanden sein, welche drehgestell- oder radsatz- oder rad- oder auch aktuatorweise den Bremsdruck einregeln.

### BEZUGSZEICHENLISTE

- 1: Vorrichtung
- 2: pneumatischer Teil
- 3: elektronischer Teil
- 5: System
- 8: Gehäuse
- 10: Druckspeicher (Druckluftspeicher)
- 12: Versorgungsleitung
- 12a: Eintrittsöffnung
- 13: Verbindungsleitung
- 14: Relaisventil (Stellglied)
- 16: Verbindungsleitung
- 18: Membranventil (Stellglied)
- 19: Verbindungsleitung
- 20: Membranventil (Stellglied)
- 21: Verbindungsleitung
- 22: Bremsleitung
- 22a: Austrittsöffnung
- 24: Bremsleitung
- 24a: Austrittsöffnung
- 26: Bremszylinder (Bremseinrichtung)
- 28: Bremszylinder (Bremseinrichtung)
- 30: Steuermittel (Relais)
- 32: Steuermittel (Membranen)
- 34: Steuermittel (Gleitschutz)
- 36: Erfassungsmittel (Relais)
- 38: Erfassungsmittel (Membranen)
- 40: Steuervorrichtung
- 42: Steuerverbindung
- 44: Steuerverbindung
- 45: Eingangsschnittstelle
- 46: Eingangsschnittstelle
- 47: Eingangsschnittstelle
- 48: Eingangsschnittstelle
- 50: Steuer- und Datenverbindung (Fahrzeug-BUS)
- 51: Ausgangsschnittstelle
- 52: Ausgangsschnittstelle
- CM: Steuerverbindung
- CR: Steuerverbindung
- CWSP: Steuerverbindung
- CWSP2: Steuerverbindung
- MM: Datenverbindung
- MR: Datenverbindung
- S10: Liegt eine Bremsanforderung vor?
- S12: Auswählen der Regelstrategie
- S13: Durchführen der Regelstrategie
- S120: Auswählen der Regelstrategie
- S122: Auswählen der anzusteuernden Stellglieder
- S14: Liegt eine Gleitschutzanforderung vor oder ist die Bremsung beendet?

## Patentansprüche

1. System (5) zur Beeinflussung eines Bremsdruckes eines Fahrzeugs, aufweisend:
mindestens eine Vorrichtung (1) zur Beeinflussung eines Bremsdruckes eines Fahrzeugs, aufweisend:
- eine Eintrittsöffnung (12a), die dazu ausgebildet ist, mit einem Druckspeicher (10) verbunden zu werden,
- mindestens eine Austrittsöffnung (22a, 24a), die dazu ausgebildet ist, mit einer Bremseinrichtung (26, 28) zu deren Betätigung, verbunden zu werden, und
- mindestens zwei Stellglieder (14, 18, 20), die zwischen der Eintrittsöffnung (12a) und der mindestens einen Austrittsöffnung (22a, 24a) angeordnet sind und die dazu ausgebildet sind, jeweils einen Bremsdruck zwischen der Eintrittsöffnung (12a) und der mindestens einen Austrittsöffnung (22a, 24a) zu beeinflussen,
wobei die mindestens zwei Stellglieder (14, 18, 20) aus der Gattung der Relais- und Kolbenventile, der Relais- und Membranventile oder der Relaisventile und Ventile einer sonstigen Gattung stammen, und
mindestens eine Steuervorrichtung (40) zur Auswahl der mindestens zwei Stellglieder (14, 18, 20) der Vorrichtung (1), aufweisend:
- ein Steuermittel, das dazu ausgebildet ist, eine Auswahl der zu steuernden Stellglieder (14, 18, 20) zwischen der Eintrittsöffnung (12a) und der mindestens einen Austrittsöffnung (22a, 24a) zu treffen, und
- mindestens eine Eingangsschnittstelle (45, 46, 47, 48), die dazu ausgebildet ist, Werte mindestens einer Zustandsgröße der Vorrichtung (1) und/oder des Fahrzeugs zu empfangen, und
- mindestens eine Ausgangsschnittstelle (51, 52), die dazu ausgebildet ist, Steuergrößen an die Vorrichtung (1) zu übertragen,
wobei die Steuervorrichtung (40) dazu ausgebildet ist, die Vorrichtung (1) zu beeinflussen, um einen Bremsdruck zu steuern und/oder zu regeln, **dadurch gekennzeichnet, dass**
die Steuerungsvorrichtung (40) dazu ausgebildet ist, bei einer Betriebsbremsung das zumindest eine Relaisventil als einzusetzendes Stellglied zur Beeinflussung des Bremsdrucks auszuwählen und bei einer Notbremsung das zumindest eine Kolbenventil-, Membranventil oder Ventil der sonstigen Gattung als einzusetzendes Stellglied zur Beeinflussung des Bremsdrucks auszuwählen.

2. System (5) nach Anspruch 1, wobei
die mindestens zwei Stellglieder (14, 18, 20) parallel und/oder in Reihe miteinander in Verbindung stehen, und/oder dazu ausgebildet sind, den Bremsdruck mittels eines Steuer- oder Regelverfahrens zu beeinflussen, und/oder
der Bremsdruck pneumatisch, oder hydraulisch ausgeprägt ist.

3. System (5) nach einem der vorangegangenen Ansprüche, wobei
mindestens zwei Stellglieder (14, 18, 20) parallel geschaltet sind, wenn sie gattungsgleich, insbesondere identisch, sind.

4. System (5) nach einem der vorangegangenen Ansprüche, aufweisend:
- ein Gehäuse (8) mit der Eintrittsöffnung (12a) und der mindestens einen Austrittsöffnung (22a, 24a), wobei in dem Gehäuse (8) die Stellglieder (14, 18, 20) angeordnet sind.

5. System (5) nach einem der vorangegangenen Ansprüche, aufweisend:
- mindestens ein Steuermittel (30, 32, 34), das dazu ausgebildet ist, mindestens eines der mindestens zwei Stellglieder (14, 18, 20) zu steuern und/oder zu regeln, um den Bremsdruck zu beeinflussen, und/oder
- Erfassungsmittel (36, 38), die dazu ausgebildet sind, Zustandsgrößen der mindestens zwei Stellglieder (14, 18, 20) zu erfassen.

6. System (5) nach einem der vorangegangenen Ansprüche, wobei
die mindestens eine Ausgangsschnittstelle (51, 52) dazu ausgebildet ist, Steuergrößen an das mindestens eine Steuermittel (30, 32, 34), zu übertragen.

7. System (5) nach einem der vorangegangenen Ansprüche, wobei
die mindestens eine Eingangsschnittstelle (45, 46, 47, 48) dazu ausgebildet ist, Werte elektronisch und/oder digital, insbesondere über eine BUS-Verbindung (50), und/oder über Erfassungsmittel (36, 38), und/oder über ein Steuermittel (30, 32, 34) zu empfangen.

8. System (5) nach einem der vorangegangenen Ansprüche, aufweisend:
- Erfassungsmittel, die zur Ermittlung von mindestens einer Zustandsgröße der Vorrichtung (1) und/oder des Fahrzeugs ausgebildet sind.

9. System (5) nach einem der vorangegangenen Ansprüche, wobei
die Steuervorrichtung (40) dazu ausgebildet ist, die mindestens zwei Stellglieder (14, 18, 20) der Vorrichtung (1), zu beeinflussen, um einen Bremsdruck zu steuern und/oder zu regeln.

10. Bremssystem zur Beeinflussung eines Bremsdruckes eines Fahrzeugs, aufweisend:
- ein System (5) nach einem der vorangegangenen Ansprüche,
- mindestens eine Bremseinrichtung (26, 28), die dazu ausgebildet ist, über das System (5) angesteuert zu werden, und
- mindestens einen Druckspeicher (10), der dazu ausgebildet ist, ein Druckmedium an das System (5) zur Verfügung zu stellen.

11. Verfahren zur Beeinflussung eines Bremsdruckes mit einem System (5) nach einem der Ansprüche 1 bis 9, aufweisend folgende Schritte:
- Auswählen (S120) der Granularität, wobei das Auswählen (S120) der Granularität eine rad-, radsatz-, drehgestell-, wagen- und/oder aktuatorweise Beeinflussung des Bremsdruckes beinhaltet,
- Auswählen (S122) der Strategie, wobei das Auswählen (S122) der Strategie eine Auswahl der zu verwendenden Stellglieder (14, 18, 20), vorzugsweise hinsichtlich ihrer Gattung und/oder Eigenschaften, beinhaltet,
- Durchführen (S13) der Beeinflussung des Bremsdruckes auf Basis der ausgewählten Granularität und Strategie.

12. Verfahren nach Anspruch 11, wobei
ein weiterer Schritt vorgesehen ist:
- Prüfen (S14), ob eine Gleitschutzanforderung vorliegt, oder die Bremsung beendet ist.

13. Verfahren nach Anspruch 11 oder 12, aufweisend mindestens einen der folgenden Schritte:
- Einstellen eines Druckniveaus innerhalb der Vorrichtung (1) mittels mindestens eines Stellgliedes (14, 18, 20), das vorzugsweise mit der Eintrittsöffnung (12a) in Verbindung steht,
- Einstellen eines Solldruckes an mindestens einer Austrittsöffnung (22a, 24a) mittels mindestens eines Stellgliedes (14, 18, 20), das vorzugsweise mit der Austrittsöffnung (22a, 24a) in Verbindung steht.

14. Verfahren nach Anspruch 13, wobei
das Einstellen des Druckniveaus innerhalb der Vorrichtung (1) dadurch erfolgt, dass das mindestens eine Stellglied (14, 18, 20), das vorzugsweise mit der Eintrittsöffnung (12a) in Verbindung steht, in eine Durchlassstellung geschaltet wird, und/oder wobei
das Einstellen des Solldruckes dadurch erfolgt, dass das mindestens eine Stellglied (14, 18, 20), das vorzugsweise mit der Austrittsöffnung (22a, 24a) in Verbindung steht, in eine Durchlassstellung geschaltet wird.

15. Computerprogrammprodukt mit auf einem maschinenlesbaren Träger gespeichertem Programmcode, der dazu ausgebildet ist, wenn er auf einer elektronischen Datenverarbeitungsanlage, insbesondere einer Steuervorrichtung, vorzugsweise nach einem der Ansprüche 1 bis 9, einem Steuermittel, einem Microcontroller, einem FPGA oder einer hardwarenahen Ausprägung der Datenverarbeitungsanlage, in einem Fahrzeug ausgeführt wird, das Fahrzeug dazu zu bringen, das Verfahren nach Anspruch 11 bis 14 durchzuführen.

## Claims

1. System (5) for influencing a brake pressure of a vehicle, having:
at least one device (1) for influencing a brake pressure of a vehicle, having:
- an inlet opening (12a) which is designed to be connected to a pressure accumulator (10),
- at least one outlet opening (22a, 24a) which is designed to be connected to a brake apparatus (26, 28) for actuating it, and
- at least two actuator elements (14, 18, 20) which are arranged between the inlet opening (12a) and the at least one outlet opening (22a, 24a) and are designed to each influence a brake pressure between the inlet opening (12a) and the at least one outlet opening (22a, 24a),
wherein the at least two actuator elements (14, 18, 20) are of the relay and piston valve type, relay and diaphragm valves or relay valves and valves of another type, and
at least one control device (40) for selecting the at least two actuator elements (14, 18, 20) of the device (1), having:
- a control means which is designed to select the actuator elements (14, 18, 20) to be controlled between the inlet opening (12a) and the at least one outlet opening (22a, 24a), and
- at least one input interface (45, 46, 47, 48) which is designed to receive values of at least one state variable of the device (1) and/or the vehicle, and
- at least one output interface (51, 52) which is designed to transmit control variables to the device (1),
wherein the control device (40) is designed to influence the device (1) in order to control and/or regulate a brake pressure, **characterized in that**
the control device (40) is designed to select the at least one relay valve as the actuator element to be used to influence the brake pressure during service braking and to select the at least one piston valve, diaphragm valve or valve of the other type as the actuator element to be used to influence the brake pressure during emergency braking.

2. System (5) according to claim 1, wherein
the at least two actuator elements (14, 18, 20) are connected to one another in parallel and/or in series, and/or are designed to influence the brake pressure by means of a control or regulation method, and/or
the brake pressure is pneumatic or hydraulic.

3. System (5) according to any one of the preceding claims, wherein
at least two actuator elements (14, 18, 20) are connected in parallel if they are of the same type, in particular identical.

4. System (5) according to any one of the preceding claims, having:
- a housing (8) with the inlet opening (12a) and the at least one outlet opening (22a, 24a), wherein the actuator elements (14, 18, 20) are arranged in the housing (8).

5. System (5) according to any one of the preceding claims, having:
- at least one control means (30, 32, 34) which is designed to control and/or regulate at least one of the at least two actuator elements (14, 18, 20) in order to influence the brake pressure, and/or
- detection means (36, 38) which are designed to detect state variables of the at least two actuator elements (14, 18, 20).

6. System (5) according to any one of the preceding claims, wherein
the at least one output interface (51, 52) is designed to transmit control variables to the at least one control means (30, 32, 34).

7. System (5) according to any one of the preceding claims, wherein
the at least one input interface (45, 46, 47, 48) is designed to receive values electronically and/or digitally, in particular via a BUS connection (50) and/or via detection means (36, 38), and/or via a control means (30, 32, 34).

8. System (5) according to any one of the preceding claims, having:
- detection means which are designed to determine at least one state variable of the device (1) and/or the vehicle.

9. System (5) according to any one of the preceding claims, wherein
the control device (40) is designed to influence the at least two actuator elements (14, 18, 20) of the device (1) in order to control and/or regulate a brake pressure.

10. Brake system for influencing a brake pressure of a vehicle, having:
- a system (5) according to any one of the preceding claims,
- at least one brake apparatus (26, 28) which is designed to be controlled via the system (5), and
- at least one pressure accumulator (10) which is designed to supply a pressure medium to the system (5).

11. Method for influencing a brake pressure with a system (5) according to any one of claims 1 to 9, having the following steps:
- selecting (S120) the granularity, wherein selecting (S120) the granularity includes influencing the brake pressure by wheel, wheel set, bogie, car and/or actuator element,
- selecting (S122) the strategy, wherein selecting (S122) the strategy includes selecting the actuator elements (14, 18, 20) to be used, preferably with regard to their type and/or properties,
- performing (S13) the influencing of the brake pressure on the basis of the selected granularity and strategy.

12. Method according to claim 11, wherein
a further step is provided:
- checking (S14) whether an anti-skid requirement exists or whether the braking has been completed.

13. Method according to claim 11 or 12, having at least one of the following steps:
- setting a pressure level inside the device (1) by means of at least one actuator element (14, 18, 20), which is preferably connected to the inlet opening (12a),
- setting a set pressure at at least one outlet opening (22a, 24a) by means of at least one actuator element (14, 18, 20) which is preferably connected to the outlet opening (22a, 24a).

14. Method according to claim 13, wherein
the pressure level inside the device (1) is adjusted by switching the at least one actuator element (14, 18, 20), which is preferably connected to the inlet opening (12a), into a pass-through position, and/or wherein
the set pressure is adjusted by switching the at least one actuator element (14, 18, 20), which is preferably connected to the outlet opening (22a, 24a), into a pass-through position.

15. Computer program product with program code stored on a machine-readable medium, which is designed, when executed on an electronic data processing system, in particular a control device, preferably according to any one of claims 1 to 9, a control means, a microcontroller, an FPGA or a hardware-related embodiment of the data processing system, in a vehicle, to cause the vehicle to carry out the method according to claims 11 to 14.

## Revendications

1. Système (5) pour influer sur une pression de freinage d'un véhicule, présentant :
au moins un dispositif (1) pour influer sur une pression de freinage d'un véhicule, présentant :
- une ouverture d'entrée (12a) qui est formée afin d'être reliée à un accumulateur de pression (10),
- au moins une ouverture de sortie (22a, 24a) qui est formée afin d'être reliée à un dispositif de freinage (26, 28) pour son actionnement et
- au moins deux organes de réglage (14, 18, 20) qui sont agencés entre l'ouverture d'entrée (12a) et l'au moins une ouverture de sortie (22a, 24a) et qui sont formés afin d'influer respectivement sur une pression de freinage entre l'ouverture d'entrée (12a) et l'au moins une ouverture de sortie (22a, 24a),
dans lequel les au moins deux organes de réglage (14, 18, 20) proviennent du genre des soupapes relais et à piston, des soupapes relais et à membrane ou des soupapes relais et des soupapes d'un autre genre et
au moins un dispositif de commande (40) pour la sélection des au moins deux organes de réglage (14, 18, 20) du dispositif (1) présentant :
- un moyen de commande qui est formé afin de faire une sélection des organes de réglage à commander (14, 18, 20) entre l'ouverture d'entrée (12a) et l'au moins une ouverture de sortie (22a, 24a) et
- au moins une interface d'entrée (45, 46, 47, 48) qui est formée afin de recevoir des valeurs au moins d'une grandeur d'état du dispositif (1) et/ou du véhicule et
- au moins une interface de sortie (51, 52) qui est formée afin de transmettre des grandeurs de commande au dispositif (1),
dans lequel le dispositif de commande (40) est formé afin d'influer sur le dispositif (1) pour commander et/ou réguler une pression de freinage, **caractérisé en ce que**
le dispositif de commande (40) est formé afin de sélectionner pour un freinage de service l'au moins une soupape relais comme organe de réglage à utiliser pour influer sur la pression de freinage et de sélectionner en cas de non-freinage l'au moins une soupape à piston, soupape à membrane ou soupape de l'autre genre comme organe de réglage à utiliser pour influer sur la pression de freinage.

2. Système (5) selon la revendication 1, dans lequel
les au moins deux organes de réglage (14, 18, 20) sont en liaison parallèlement et/ou en série l'un avec l'autre, et/ou sont formés afin d'influer sur la pression de freinage au moyen d'un procédé de commande ou de régulation, et/ou
la pression de freinage est de type pneumatique et/ou hydraulique.

3. Système (5) selon l'une quelconque des revendications précédentes, dans lequel
au moins deux organes de réglage (14, 18, 20) sont montés en parallèle lorsqu'ils sont du même genre, en particulier identiques.

4. Système (5) selon l'une quelconque des revendications précédentes, présentant :
- un boîtier (8) avec l'ouverture d'entrée (12a) et l'au moins une ouverture de sortie (22a, 24a), dans lequel les organes de réglage (14, 18, 20) sont agencés dans le boîtier (8).

5. Système (5) selon l'une quelconque des revendications précédentes, présentant :
- au moins un moyen de commande (30, 32, 34) qui est formé afin de commander et/ou de réguler au moins un des au moins deux organes de réglage (14, 18, 20) afin d'influer sur la pression de freinage et/ou
- des moyens de détection (36, 38) qui sont formés afin de détecter des grandeurs d'état des au moins deux organes de réglage (14, 18, 20).

6. Système (5) selon l'une quelconque des revendications précédentes, dans lequel
la au moins une interface de sortie (51, 52) est formée afin de transmettre des grandeurs de commande à l'au moins un moyen de commande (30, 32, 34).

7. Système (5) selon l'une quelconque des revendications précédentes, dans lequel
l'au moins une interface d'entrée (45, 46, 47, 48) est formée afin de recevoir des valeurs de manière électronique et/ou numérique, en particulier par le biais d'une liaison BUS (50) et/ou par le biais de moyens de détection (36, 38) et/ou par le biais d'un moyen de commande (30, 32, 34).

8. Système (5) selon l'une quelconque des revendications précédentes, présentant :
- des moyens de détection qui sont formées pour la détermination d'au moins une grandeur d'état du dispositif (1) et/ou du véhicule.

9. Système (5) selon l'une quelconque des revendications précédentes, dans lequel
le dispositif de commande (40) est formé afin d'influer sur les au moins deux organes de réglage (14, 18, 20) du dispositif (1) pour commander et/ou réguler une pression de freinage.

10. Système de freinage pour influer sur une pression de freinage d'un véhicule, présentant :
- un système (5) selon l'une quelconque des revendications précédentes,
- au moins un dispositif de freinage (26, 28) qui est formé afin d'être commandé par le biais du système (5) et
- au moins un accumulateur de pression (10) qui est formé afin de mettre à disposition un agent sous pression du système (5).

11. Procédé pour influer sur une pression de freinage avec un système (5) selon l'une quelconque des revendications 1 à 9, présentant les étapes suivantes :
- la sélection (S120) de la granularité, dans lequel la sélection (S120) de la granularité contient une influence par roue, jeu de roue, bâti rotatif, chariot et/ou actionneur de la pression de freinage,
- la sélection (S122) de la stratégie, dans lequel la sélection (S122) de la stratégie contient une sélection des organes de réglage (14, 18, 20) à utiliser de préférence en ce qui concerne leur genre et/ou leurs propriétés,
- la réalisation (S13) de l'influence de la pression de freinage sur la base de la granularité et de la stratégie sélectionnées.

12. Procédé selon la revendication 11, dans lequel
une autre étape est prévue :
- la vérification (S14) s'il existe une exigence de protection contre les glissements ou le freinage est terminé.

13. Procédé selon la revendication 11 ou 12, présentant au moins une des étapes suivantes :
- le réglage d'un niveau de pression à l'intérieur du dispositif (1) au moyen d'au moins un organe de réglage (14, 18, 20) qui est en liaison de préférence avec l'ouverture d'entrée (12a),
- le réglage d'une pression de consigne sur au moins une ouverture de sortie (22a, 24a) au moyen d'au moins un organe de réglage (14, 18, 20) qui est en liaison de préférence avec l'ouverture de sortie (22a, 24a).

14. Procédé selon la revendication 13, dans lequel
le réglage du niveau de pression à l'intérieur du dispositif (1) est effectué du fait que l'au moins un organe de réglage (14, 18, 20) qui est en liaison de préférence avec l'ouverture d'entrée (12a), est monté dans une position de passage et/ou dans lequel
le réglage de la pression de consigne est effectué du fait que l'au moins un organe de réglage (14, 18, 20) qui est en liaison de préférence avec l'ouverture de sortie (22a, 24a), est monté dans une position de passage.

15. Produit de programme informatique avec un code de programme enregistré sur un support lisible par machine qui est formé lorsqu'il est exécuté sur une installation de traitement de données électronique, en particulier un dispositif de commande, de préférence selon l'une quelconque des revendications 1 à 9, un moyen de commande, un microcontrôleur, un FPGA ou une forme proche du matériel de l'installation de traitement de données, dans un véhicule afin d'amener le véhicule à mettre en œuvre le procédé selon les revendications 11 à 14.
